(19) Europäisches Patentamt
European Patent Office
Office européen des brevets

(11) **EP 0 899 921 B1**

(12) **FASCICULE DE BREVET EUROPEEN**

(45) Date de publication et mention
de la délivrance du brevet:
**29.09.2004 Bulletin 2004/40**

(51) Int Cl.7: **H04L 25/02**

(21) Numéro de dépôt: **98402017.2**

(22) Date de dépôt: **07.08.1998**

(54) **Circuit d'attaque de ligne symétrique**

Symmetrischer Leitungstreiber

Balanced line driver

(84) Etats contractants désignés:
**DE GB IT NL**

(30) Priorité: **11.08.1997 FR 9710256**

(43) Date de publication de la demande:
**03.03.1999 Bulletin 1999/09**

(73) Titulaire: **ATMEL NANTES SA**
**44300 Nantes (FR)**

(72) Inventeurs:
• **Gerber, Rémi**
**44300 Nantes (FR)**
• **Chea Chan, Viry**
**44800 Saint-Herblain (FR)**

(74) Mandataire: **Fréchède, Michel**
**Cabinet Plasseraud**
**84, rue d'Amsterdam**
**75440 Paris Cédex 09 (FR)**

(56) Documents cités:
EP-A- 0 632 392      WO-A-84/02620
US-A- 5 341 039      US-A- 5 504 782

• **GABARA, THOMPSON: "High speed, low power CMOS transmitter-receiver system" PROCEEDINGS OF THE INTERNATIONAL CONFERENCE ON COMPUTER DESIGN, 3 - 5 octobre 1988, NEW YORK, US, pages 344-347, XP000044720**

**Description**

L'invention concerne un dispositif adaptateur symétrique de commutation d'un signal logique.

Les systèmes informatiques actuels permettent d'assurer le traitement de volumes de données de plus en plus importants.

Alors que, qualitativement, ces données sont codées selon un codage binaire, les traitements correspondants faisant essentiellement appel, selon un premier niveau de traitement, à des fonctions logiques, puis, selon un deuxième niveau de traitement, à des fonctions sémantiques, lexicales ou numériques, l'ensemble de ces fonctions, complexes, ne peut être mis en oeuvre que sur des signaux logiques dont les tolérances analogiques, valeurs de tensions, de courants temps de montée et/ou de descente à la commutation, sont calibrées et maintenues dans des plages de tolérances acceptables bien définies.

C'est en particulier le cas pour ce qui concerne la transmission de ces signaux, ou au moins leur acheminement, entre les différents étages des circuits intégrés ou entre différents circuits intégrés, assurant, par exemple, les fonctions de deuxième niveau précitées dans un système informatique donné.

Le document WO 84/02620 divulgue un circuit de commutation d'un signal logique, et l'asymétrie qui peut se produire en temps de communication. Il est proposé dans ce document de résoudre ce problème en modifiant le récepteur.

La présente invention a pour objet la mise en oeuvre d'un dispositif adaptateur symétrique de commutation d'un signal logique permettant en particulier d'assurer une transmission de ce type de signaux tout en provoquant une atténuation des réflexions provoquées, lors de cette transmission, par l'inadaptation des circuits classiques à l'impédance caractéristique de la ligne de transmission utilisée.

Un autre objet de la présente invention est la mise en oeuvre d'un dispositif adaptateur symétrique de commutation permettant d'assurer une adaptation de commutation des signaux logiques transmis, tant du point de vue statique que du point de vue dynamique, des transitions constitutives de ces commutations.

Un autre objet de la présente invention est également la mise en oeuvre d'un dispositif adaptateur symétrique de commutation permettant en outre de conserver une symétrie des formes d'ondes par rapport au sens de commutation niveau logique haut/ niveau logique bas ou réciproquement.

Un autre objet de la présente invention est également la mise en oeuvre d'un dispositif adaptateur symétrique de commutation utilisable pour des lignes de transmission courtes, quelques centimètres, ou longues, quelques mètres.

Le dispositif adaptateur symétrique de commutation d'un signal logique, objet de la présente invention, la commutation de ce signal logique intervenant entre un niveau logique haut et un niveau logique bas, ou réciproquement, délivre un signal logique adapté en phase avec ce signal logique et un signal sensiblement constant sur une borne de sortie à haute impédance. Il est remarquable en ce qu'il comporte au moins, connectés en cascade, un module de commande de transmission ou de non-transmission par ce dispositif adaptateur, ce module de commande recevant sur une première borne d'entrée ce signal logique et sur une deuxième borne d'entrée un signal logique de commande et délivrant un premier et un deuxième signal de commande de commutation asymétrique, le premier signal de commande de commutation du niveau logique haut au niveau logique bas, ou réciproquement, présentant un temps de descente, respectivement de montée, supérieur à celui du deuxième signal de commande de commutation, à ce module de commande étant connecté un module de commutation de type bistable recevant le premier et le deuxième signal de commande de commutation et délivrant sur une borne de sortie, constituant la borne de sortie du dispositif adaptateur symétrique, soit le signal logique adapté en phase avec le signal logique pour une première valeur logique du signal logique de commande, soit, pour une valeur complémentée de cette première valeur logique du signal de commande, ledit signal sensiblement constant sur la borne de sortie à haute impédance.

Le dispositif adaptateur symétrique de commutation d'un signal logique, objet de la présente invention, trouve application à l'industrie des circuits intégrés, notamment en technologie CMOS.

Il sera mieux compris à la lecture de la description et à l'observation des dessins ci-après dans lesquels :

- la figure 1 représente un schéma fonctionnel du dispositif adaptateur symétrique, objet de la présente invention ;
- la figure 2 représente, à titre d'exemple non limitatif, un mode de réalisation en technologie CMOS du dispositif adaptateur symétrique, objet de la présente invention, représenté en figure 1 ;
- les figures 3a et 3b représentent un chronogramme des courants consommés par le module de commutation de type bistable réalisé en technologie CMOS, lors d'une commutation ;
- les figures 4a et 4b représentent un chronogramme des commutations niveau logique bas/ niveau logique haut du signal logique et du signal logique adapté transmis par le dispositif adaptateur symétrique, respectivement du premier et du deuxième signal de commande de commutation asymétrique correspondant ;
- les figures 5a et 5b représentent un chronogramme des commutations niveau logique haut/ niveau logique bas du signal logique adapté transmis par le dispositif adaptateur symétrique, respectivement du premier et du deuxième signal de commande de commutation asymétrique correspondant ;

- les figures 6a et 6b représentent un chronogramme des commutations niveau logique bas/ niveau logique haut, respectivement haut/ bas, d'un signal logique au moyen d'un dispositif adaptateur symétrique équipé d'une ligne de transmission spécifique à la jonction sortie dispositif adaptateur ligne de transmission et extrémité de ligne de transmission ;

- les figures 7a et 7b représentent un chronogramme des commutations niveau logique bas/ niveau logique haut, respectivement haut/ bas, d'un signal logique transmis sur une ligne de transmission identique à la ligne utilisée dans le cas des figures 6a et 6b, en l'absence de dispositif adaptateur symétrique conforme à l'objet de l'invention, au niveau de l'entrée de ligne et de l'extrémité de ligne.

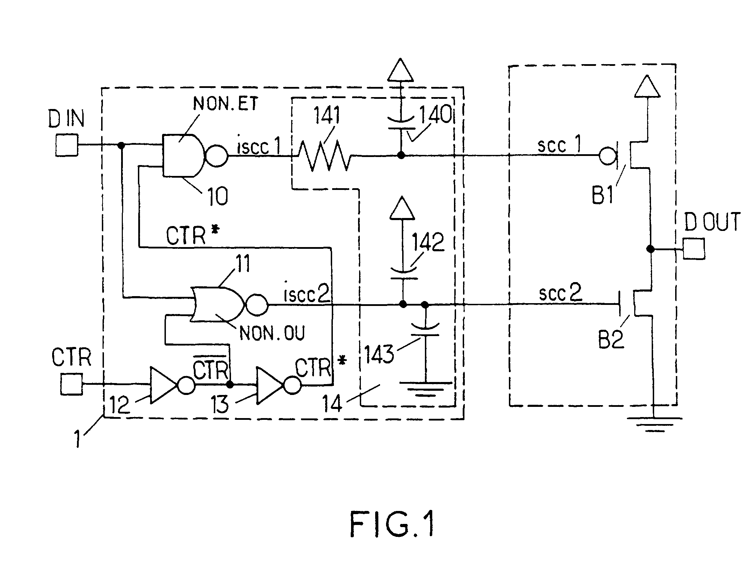

Le dispositif adaptateur symétrique de commutation d'un signal logique, objet de la présente invention, sera maintenant décrit en liaison avec la figure 1 et les figures suivantes.

D'une manière générale, on rappelle que la commutation du signal logique transmis par le dispositif adaptateur symétrique de commutation, objet de la présente invention, intervient entre un niveau logique haut et un niveau bas ou réciproquement, ce dispositif délivrant ainsi un signal logique adapté en phase avec le signal logique d'origine ou, respectivement, un signal sensiblement constant sur une borne de sortie à haute impédance. Ainsi, de manière classique, le dispositif adaptateur symétrique de commutation d'un signal logique, objet de la présente invention, délivre sur sa borne de sortie, soit le signal logique adapté en phase avec le signal logique d'origine, soit le signal sensiblement constant, la borne de sortie étant alors dans un état haute impédance, ce dispositif présentant ainsi les caractéristiques d'un dispositif trois états.

Dans ce but, ainsi que représenté en figure 1, le dispositif adaptateur symétrique de commutation d'un signal logique, objet de la présente invention, comprend un module 1 de commande de transmission ou de non-transmission par le dispositif adaptateur du signal logique d'origine. Ce module de commande 1 reçoit sur une première borne d'entrée le signal logique d'origine, noté DIN, et sur une deuxième borne d'entrée un signal logique de commande, noté CTR. Le module 1 de commande de transmission délivre un premier et un deuxième signal de commande de commutation asymétrique, notés $scc_1$ pour le premier signal de commutation asymétrique et $scc_2$ pour le deuxième signal de commutation asymétrique.

Selon une caractéristique particulièrement remarquable du dispositif adaptateur symétrique de commutation d'un signal logique, objet de la présente invention, le premier signal de commande de commutation $scc_1$ présente un temps de descente, respectivement de montée, supérieur à celui du deuxième signal de commande de commutation $scc_2$.

En outre, le dispositif adaptateur symétrique de commutation d'un signal logique, objet de la présente invention, comprend un module 2 de commutation de type bistable recevant le premier $scc_1$ et le deuxième $scc_2$ signal de commande de commutation et délivre sur une borne de sortie constituant la borne de sortie du dispositif adaptateur symétrique d'un signal logique, objet de l'invention, soit le signal logique adapté en phase avec le signal logique pour une première valeur logique du signal logique de commande, soit pour une valeur complémentée de cette première valeur logique du signal logique de commande, le signal sensiblement constant sur la borne de sortie à haute impédance.

D'une manière générale, on indique que le module 2 de commutation de type bistable est réalisé en technologie CMOS à partir d'un élément de commutation de type CMOS-P, portant la référence $B_1$ sur la figure 1, et un élément de commutation de type CMOS-N, portant la référence $B_2$ sur la figure 1. On indique en particulier que la structure asymétrique du premier et du deuxième signal de commande de commutation $scc_1$ et $scc_2$ est adaptée afin de tenir compte des différences de paramètres de temps de commutation des deux éléments de commutation de type CMOS-P, référencé $B_1$, et de type CMOS-N, référencé $B_2$, afin justement de permettre d'obtenir en sortie un signal de sortie DOUT sensiblement symétrique, tant à la commutation niveau logique haut/niveau logique bas que réciproquement, ainsi qu'il sera décrit ultérieurement dans la description.

On comprend en particulier que l'élément de commutation de type CMOS-P $B_1$ peut être réalisé en fonction des caractéristiques de la ligne de sortie par un transistor CMOS de type P, de largeur de canal adaptée, alors que, ainsi qu'il sera décrit ci-après dans la description, l'élément de commutation CMOS de type N, $B_2$, sera réalisé au moyen d'un groupe de transistors CMOS de type N dont les caractéristiques, en particulier la largeur de canal, sont adaptées afin d'obtenir les caractéristiques à la commutation relatives, tant à l'impédance de commutation qu'au temps de montée ou de descente lors de la commutation du niveau logique bas au niveau logique haut, respectivement du niveau logique haut au niveau logique bas, sensiblement comparables à celles de l'élément de commutation $B_1$ précité.

Ainsi, le caractère symétrique du dispositif adaptateur de commutation d'un signal logique, objet de la présente invention, résulte de la mise en oeuvre, d'une part, des signaux de commande asymétriques précités $scc_1$ et $scc_2$ ainsi que, d'autre part, d'éléments de commutation $B_1$ et $B_2$ spécifiques.

Une description plus détaillée du module 1 de commande sera maintenant donnée, toujours en liaison avec la même figure 1.

Sur la figure précitée, le module 1 de commande comporte au moins une porte logique NON-ET 10 recevant sur une première entrée logique le signal logique d'origine et sur une deuxième entrée un signal logique duplication du signal logique de commande CTR, et noté pour cette raison CTR*. On comprend en particulier que le signal logique duplication du signal logique de commande CTR peut être obtenu à partir de ce dernier au temps de retard de circuits électroniques de transmission, ainsi qu'il sera décrit ci-après dans la description. Ainsi, la borne de sortie de la porte logique NON-ET 10 délivre un premier signal de commande de commutation intermédiaire, noté pour cette raison $iscc_1$.

En outre, ainsi que représenté sur la figure 1, le module 1 de commande de transmission comporte également une porte logique NON-OU, portant la référence 11, et un premier inverseur 12, lequel reçoit le signal logique de commande CTR et délivre un signal logique de commande inversé, noté pour cette raison $\overline{CTR}$. La porte logique NON-OU 11 reçoit en outre, sur une première entrée logique, le signal logique d'origine DIN, et sur une deuxième entrée logique, le signal logique de commande inversé $\overline{CTR}$, et délivre en conséquence un deuxième signal logique de commande de commutation intermédiaire, noté pour cette raison $iscc_2$.

En outre, le module de commande 1 comporte un deuxième inverseur 13, lequel reçoit le signal logique de commande inversé $\overline{CTR}$, et délivre le signal logique duplication du signal logique de commande CTR*. On comprend ainsi qu'après deux inversions par l'intermédiaire des inverseurs 12 et 13, le signal logique duplication du signal logique de commande CTR* est en phase avec le signal logique de commande CTR mais décalé dans le temps d'une durée correspondant au temps de transmission par les deux inverseurs 12 et 13 précités.

Enfin, le module de commande 1 comporte un module 14 de mise en forme asymétrique recevant le premier et le deuxième signal logique de commande de commutation intermédiaire $iscc_1$ et $iscc_2$ pour délivrer le premier et le deuxième signal de commande de commutation $scc_1$ et $scc_2$.

Sur la figure 1, le module 14 de mise en forme asymétrique est réputé comporter des éléments électriques 140, 142, 143 de type capacitif ainsi qu'un élément résistif 141 dont les valeurs sont adaptées de façon à modifier les temps de montée, respectivement de descente, des signaux logiques de commande de commutation intermédiaire $iscc_1$ et $iscc_2$ dont les temps de montée, respectivement de descente, à l'issue des portes NON-ET 10 et 11, sont sensiblement identiques ou, à tout le moins, trop peu différents pour permettre d'assurer directement un pilotage convenable des éléments de commutation $B_1$ et $B_2$ du module 2 de commutation précédemment mentionné dans la description.

Ainsi, on comprend que le module 14 de mise en forme asymétrique peut comprendre, ainsi que représenté sur la figure 1, un premier circuit à résistance capacité 141, 140, dont les valeurs sont choisies de façon à présenter une première constante de temps de valeur donnée, ce premier circuit à résistance capacité recevant le premier signal logique de commande de commutation intermédiaire $iscc_1$ pour finalement délivrer le premier signal de commande de commutation

$scc_1$.

Le module 14 de mise en forme asymétrique comprend également un deuxième circuit à résistance capacité d'une deuxième constante de temps, constitué par les capacités 142 et 143 représentées sur la figure 1. On comprend bien sûr que les capacités 142 et 143, compte tenu des impédances d'entrée et de sortie de l'élément de commutation $B_2$, respectivement de la porte NON-OU 11, permettent ainsi de constituer un deuxième circuit à résistance capacité d'une deuxième constante de temps supérieure à la première constante de temps relative au premier circuit à résistance capacité 141, 140. Ainsi, le deuxième circuit à résistance capacité reçoit le deuxième signal logique de commande de commutation intermédiaire $iscc_2$ et délivre le deuxième signal de commande de commutation $scc_2$ à l'élément de commutation $B_2$.

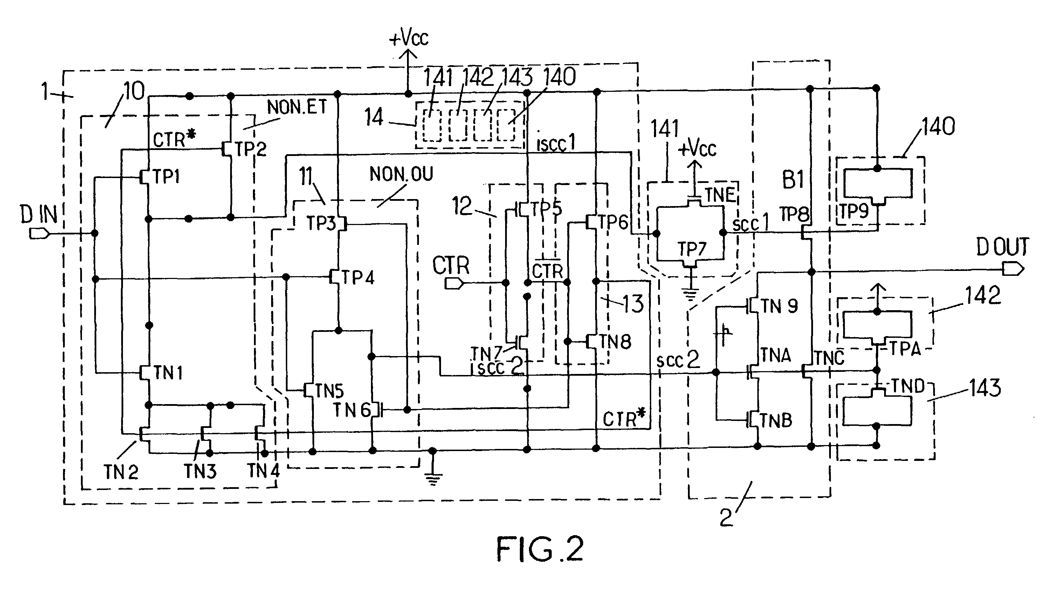

Une description plus détaillée d'un mode particulier de mise en oeuvre du dispositif adaptateur symétrique de commutation d'un signal logique, objet de la présente invention, tel que représenté en figure 1, en technologie CMOS, sera maintenant donnée en liaison avec la figure 2, cette figure représentant un schéma d'implantation électrique des composants CMOS permettant la mise en oeuvre des éléments fonctionnels représentés en figure 1.

Pour cette raison, les mêmes éléments fonctionnels sont reportés sur la figure 2 dans les conditions qui seront explicitées ci-après.

En ce qui concerne en premier lieu le module 2 de commutation de type bistable, celui-ci peut comporter, ainsi que représenté sur la figure 2 précitée, un transistor MOS de type P, portant la référence TP8 et constituant en fait l'élément de commutation $B_1$ de la figure 1. Le transistor CMOS-P TP8 est connecté entre la tension d'alimentation et un point intermédiaire constitutif de la borne de sortie délivrant le signal DOUT, signal logique adapté en phase avec le signal logique d'origine DIN, ce point intermédiaire étant bien entendu connecté à l'élément de commutation $B_2$ ainsi que représenté en figure 1.

On comprend ainsi que les éléments de commutation $B_1$ et $B_2$ constituent un élément de commutation de type bistable, l'élément de commutation $B_2$ étant connecté entre ce point intermédiaire ou borne de sortie et la tension de référence ou tension de masse du dispositif adaptateur symétrique de commutation d'un signal logique, objet de la présente invention. Bien entendu, l'électrode de drain du transistor TP8 est connectée à la tension d'alimentation positive Vcc correspondant au niveau logique haut, alors que l'électrode de source de ce même transistor TP8 est connectée à la borne de sortie du dispositif adaptateur symétrique de commutation d'un signal logique, c'est-à-dire au point intermédiaire précité pour délivrer le signal DOUT. L'électrode de grille du transistor TP8 reçoit le premier signal de commande de commutation $scc_1$.

En ce qui concerne l'élément de commutation

$B_2$ représenté en figure 1, celui-ci, dans le mode de réalisation représenté en figure 2, comprend un transistor MOS de type N, référencé TN9, dont l'électrode de source est connectée à la borne de sortie, c'est-à-dire la borne intermédiaire précitée du dispositif adaptateur symétrique de commutation de signal logique, objet de la présente invention, et dont l'électrode de drain est connectée à la tension de référence par l'intermédiaire d'un circuit d'adaptation d'impédance statique au transistor MOS de type P, TP8, précédemment mentionné. On rappelle ici que la tension de référence ou tension de masse correspond au niveau logique bas du signal logique d'origine. L'électrode de grille du transistor MOS de type N TN9 reçoit bien entendu le deuxième signal de commande de commutation $scc_2$.

En ce qui concerne le circuit d'adaptation d'impédance statique au transistor MOS de type P TP8 ou $B_1$ de l'élément de commutation $B_2$, on indique, ainsi que représenté sur la figure 2, que celui-ci comprend avantageusement un premier et un deuxième transistor MOS de type N, notés TNA, TNB, connectés en série avec le transistor MOS de type N, TN9 précité, ainsi qu'un troisième transistor MOS de type N, noté TNC, ce troisième transistor MOS de type N, référencé TNC, étant connecté en parallèle sur la branche formée par le transistor MOS de type N, TN9, le premier et le deuxième transistor MOS de type N connectés en série avec ce dernier, référencés TNA et TNB. Les électrodes de grille du premier TNA, du deuxième TNB et du troisième TNC transistor MOS de type N reçoivent également le deuxième signal de commande de commutation $scc_2$.

Toutefois, dans le mode de réalisation de la figure 2, on indique que les modes d'implantation des éléments résistifs 141 et capacitifs 140, 142 et 143 destinés à constituer le module 14 de mise en forme asymétrique précédemment mentionné dans la description ne sont pas représentés fonctionnellement au même niveau que dans le cas de la figure 1, afin de ne pas surcharger le dessin. En effet, ces éléments étant tous réalisés également en technologie CMOS, leur lieu d'implantation peut être quelconque en fonction de la surface de silicium requise. Ainsi, pour ce qui concerne les éléments 140, 142 et 143, ceux-ci peuvent être réalisés, ainsi que représenté sur la figure 2, par l'intermédiaire d'un transistor TP9 et TPA pour les éléments 140, 142, respectivement un transistor NMOS TND pour l'élément 143, dont les électrodes de drain et de source sont reliées en parallèle à la tension d'alimentation Vcc pour les transistors TP9 et TPA relatifs aux éléments 140 et 142, alors que les électrodes de drain et de source du transistor NMOS TNB sont reliées en parallèle à la tension de référence pour l'élément 143. L'électrode de grille du transistor TP9 reçoit le premier signal de commande de commutation intermédiaire $iscc_1$ par l'intermédiaire de la résistance 141, c'est-à-dire finalement le premier signal de commande de commutation $scc_1$ pour la grille du transistor TP8, alors qu'au contraire, l'électrode de grille des transistors TPA et TND reçoit le deuxième signal de commande de commutation intermédiaire $iscc_2$. On comprend ainsi que, en raison de la polarisation à la même tension des électrodes de drain et de source des transistors TP9 et TPA, TND, la capacité de l'électrode grille/source, ou capacité d'entrée de chaque transistor correspondant, est ainsi utilisée pour réaliser les éléments capacitifs 140, 142 et 143 représentés en figure 1.

En ce qui concerne l'élément résistif 141, celui-ci peut être réalisé, ainsi que représenté en figure 2, grâce à la mise en oeuvre d'un transistor NMOS TNE et d'un transistor PMOS TP7 connectés en tête-bêche, électrode de source - drain, respectivement de drain - source, l'électrode de grille du transistor TNE étant reliée à la tension d'alimentation +Vcc et l'électrode de grille du transistor PMOS TP7 étant reliée à la tension de référence. Ainsi, les deux transistors TNE, TP7 se comportent comme une résistance correspondant à la résistance en parallèle du canal drain - source de chacun des deux transistors précités. Le signal $iscc_1$, premier signal logique de commande intermédiaire, est alors transmis par l'élément résistif 141 ainsi constitué pour engendrer avec l'élément capacitif 140 le premier signal logique de commande de commutation $scc_1$.

Afin de rappeler le caractère fonctionnel du module 14 de mise en format symétrique tel que représenté en figure 1, celui-ci est rappelé en trait mixte sur la figure 2 au niveau du module 1 de commande correspondant avec ses éléments constitutifs 141, 142, 143 et 140 précédemment mentionnés, bien que ces éléments constitutifs ne soient pas implantés au niveau du module 1 de commande de transmission ou de non-transmission précédemment décrit en liaison avec la figure 1.

En ce qui concerne la porte logique 10 de type NON-ET, celle-ci peut bien entendu être réalisée en technologie CMOS, ainsi que représenté sur la figure 2. Dans un tel cas, on indique que cette porte logique peut comprendre un transistor PMOS, noté TP1, connecté en cascade avec un transistor NMOS TN1, lui-même connecté en cascade avec trois transistors NMOS connectés en parallèle, TN2, TN3 et TN4. Le groupe de transistors TN2, TN3 et TN4 est donc connecté en série avec le transistor NMOS TN1 et le transistor PMOS, noté TP1, entre la tension d'alimentation Vcc et la tension de référence du dispositif adaptateur symétrique de commutation du signal logique, objet de l'invention. La grille des transistors TP1 et TN1 reçoit le signal logique d'origine DIN. En outre, sur le transistor PMOS TP1 est connecté en parallèle un transistor TP2. Le point commun aux électrodes de drain des transistors TP1 et TP2 et de source du transistor TN1 constitue la borne de sortie de la porte NON-ET 10 et délivre en conséquence le premier signal de commande de commutation intermédiaire $iscc_1$. Les électrodes de grille des transistors TP2 et des transistors TN2, TN3 et TN4 reçoivent le signal logique duplication du signal logique de commande noté CTR*.

En ce qui concerne la porte NON-OU 11, celle-ci comprend, ainsi que représenté sur la figure 2, un transistor PMOS TP3 dont l'électrode de drain est connectée à la tension d'alimentation +Vcc, ce transistor TP3 étant connecté avec un autre transistor PMOS TP4 en série, l'ensemble constitué par les transistors TP3, TP4 étant lui-même connecté en série avec deux transistors NMOS en parallèle, TN5 et TN6. Les électrodes de source des transistors TN5 et TN6 sont connectées à l'électrode de source du transistor PMOS TP4 et les électrodes de drain des transistors TN5 et TN6 sont connectées à la tension de référence. Les électrodes de grille des transistors TP4 et TN5 reçoivent le signal logique d'origine DIN. Les électrodes de grille du transistor PMOS TP3 et du transistor NMOS TN6 sont interconnectées l'une à l'autre. Le point commun entre les électrodes des transistors TP4, TN5 et TN6 constituent la borne de sortie de la porte NON-OU 11, laquelle délivre le deuxième signal de commande de commutation intermédiaire $iscc_2$.

Enfin, le premier inverseur 12 est constitué, ainsi que représenté en figure 2, de manière classique, par un transistor PMOS TP5 et un transistor NMOS TN7, lesquels sont commandés de façon à constituer un élément de type bistable entre la tension d'alimentation +Vcc et la tension de référence, les électrodes de grille des transistors TP5 et TN7 recevant le signal de commande CTR précité, le point commun des électrodes des transistors TP5 et TN7 délivrant le signal de commande inversé $\overline{CTR}$.

De la même manière, le deuxième inverseur 13 est constitué par un transistor PMOS TP6 et un transistor NMOS TN8 connectés en cascade de façon à réaliser un dispositif du type bistable entre la tension d'alimentation Vcc et la tension de référence. Les électrodes de grille des transistors TP6 et TN8 reçoivent le signal de commande inversé $\overline{CTR}$ et le point commun des électrodes des transistors TP6 et TN8 délivrent le signal logique duplication du signal de commande, noté CTR*. Le signal de commande inversé $\overline{CTR}$ est en outre délivré par une interconnexion à l'électrode de grille des transistors TN6 et TP3 de la porte logique NON-OU 11.

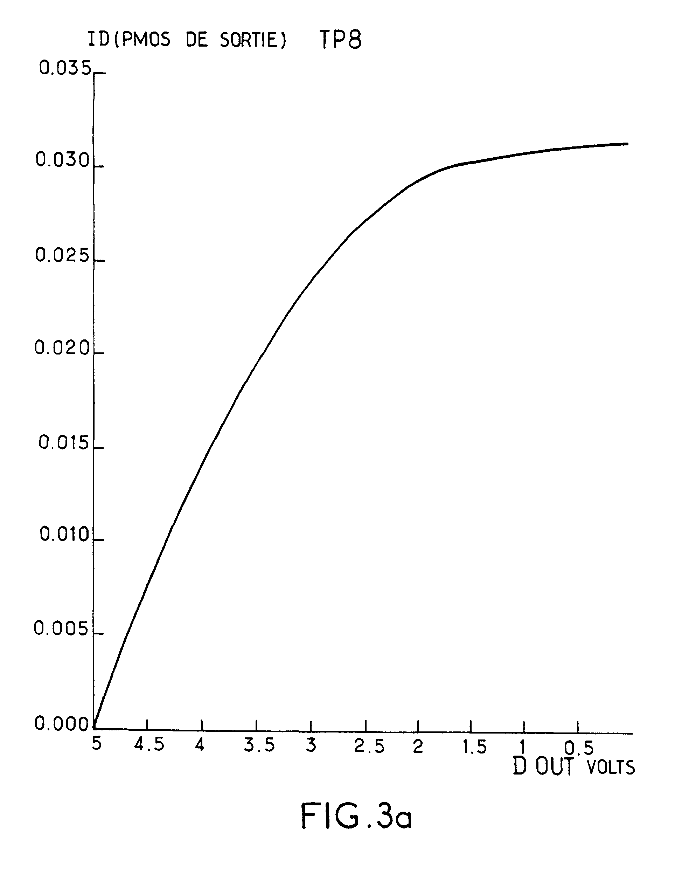

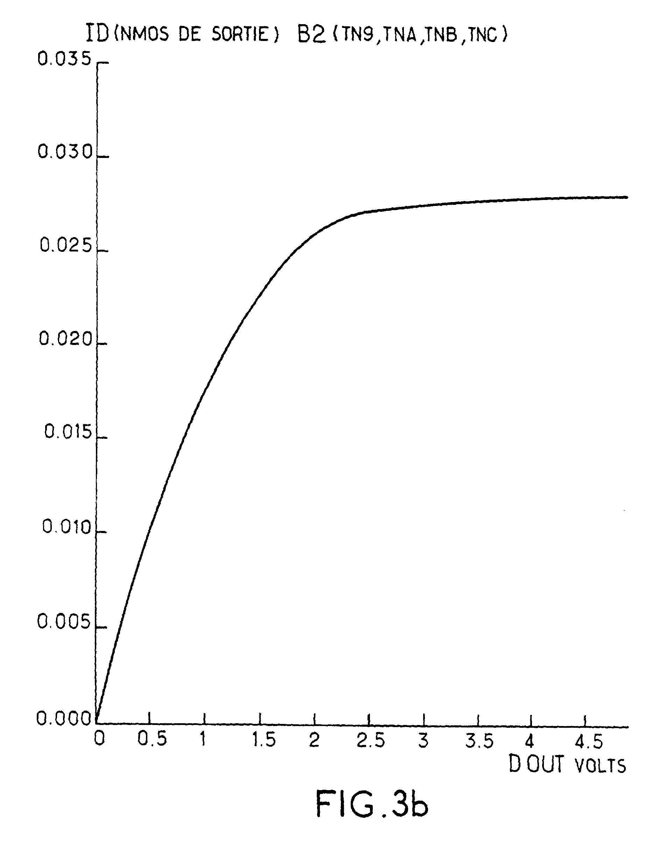

Différents signaux relevés en des points de test remarquables du dispositif adaptateur symétrique de commutation d'un signal logique, objet de la présente invention, seront maintenant décrits en liaison avec les figures 3a, 3b et suivantes.

Sur les figures 3a et 3b, on a représenté la montée en courant de l'élément de commutation $B_1$, c'est-à-dire en définitive du transistor PMOS TP8 de la figure 2, pour une commutation de 5 volts à 0 volt, c'est-à-dire du niveau logique haut au niveau logique bas, alors que sur la figure 3b, on a représenté la montée en courant de l'élément de commutation $B_2$ dans les mêmes conditions de commutation. La tension de grille appliquée à l'élément de commutation $B_1$ était de 0 volt pour une température ambiante de 25°C. Au contraire, la tension de grille appliquée à l'élément de commutation $B_2$ était de 5 volts pour une température de 25°C. La tension d'alimentation Vcc était à la valeur courante 5 volts.

En ce qui concerne la figure 3b, on indique que la valeur du courant transitant dans l'élément de commutation $B_2$ est en fait la valeur du courant transitant dans les transistors TN9, TNA, TNB et TNC représentés en figure 2.

On peut constater que la montée en courant, tant dans l'élément de commutation $B_1$ que dans l'élément de commutation $B_2$, est sensiblement identique. La variation maximale de courant entre les deux transitions est de l'ordre de 5 mA à la valeur maximale du courant, c'est-à-dire 33 mA.

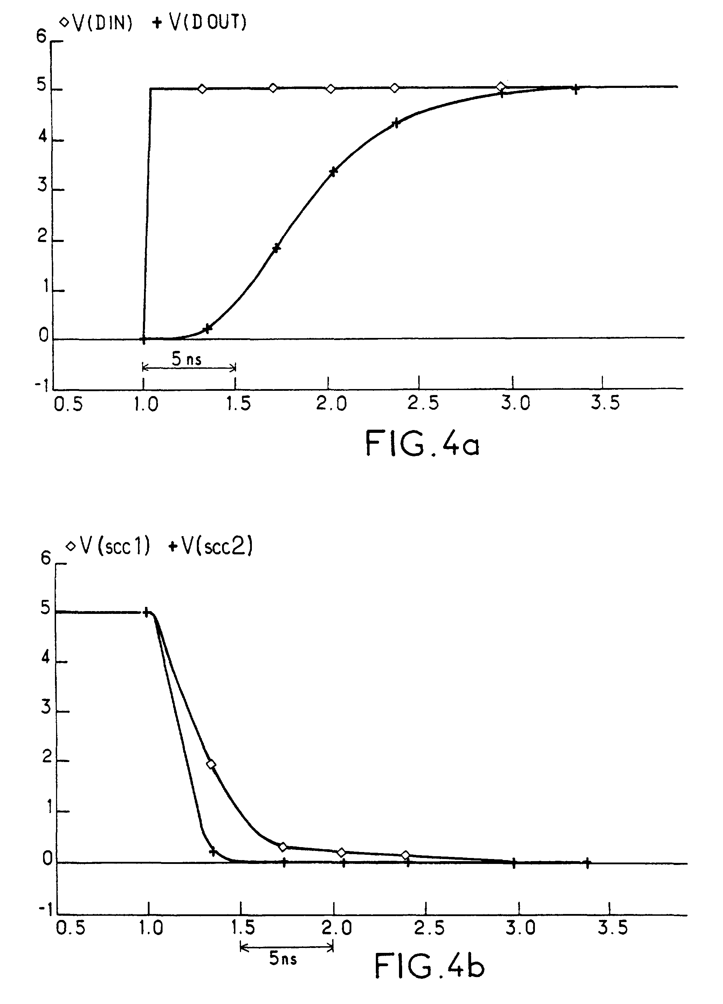

Sur la figure 4a, on a représenté au contraire, pour une transition d'un signal logique à un niveau logique bas à un niveau logique haut passant de 0 à 5 volts en un temps de commutation n'excédant pas 0,5 ns, l'évolution du signal de sortie DOUT constituant en fait le signal adapté en phase avec le signal logique d'origine. Le retard total du temps de montée du signal de sortie DOUT par rapport au signal logique d'origine DIN n'excède pas 20 ns.

Sur la figure 4b au contraire, on a représenté l'évolution du premier $scc_1$ et du deuxième $scc_2$ signal de commande de commutation. Le premier signal de commande de commutation $scc_1$ présente un temps de descente supérieur au temps de descente du deuxième signal de commande de commutation $scc_2$ d'environ 3 ns.

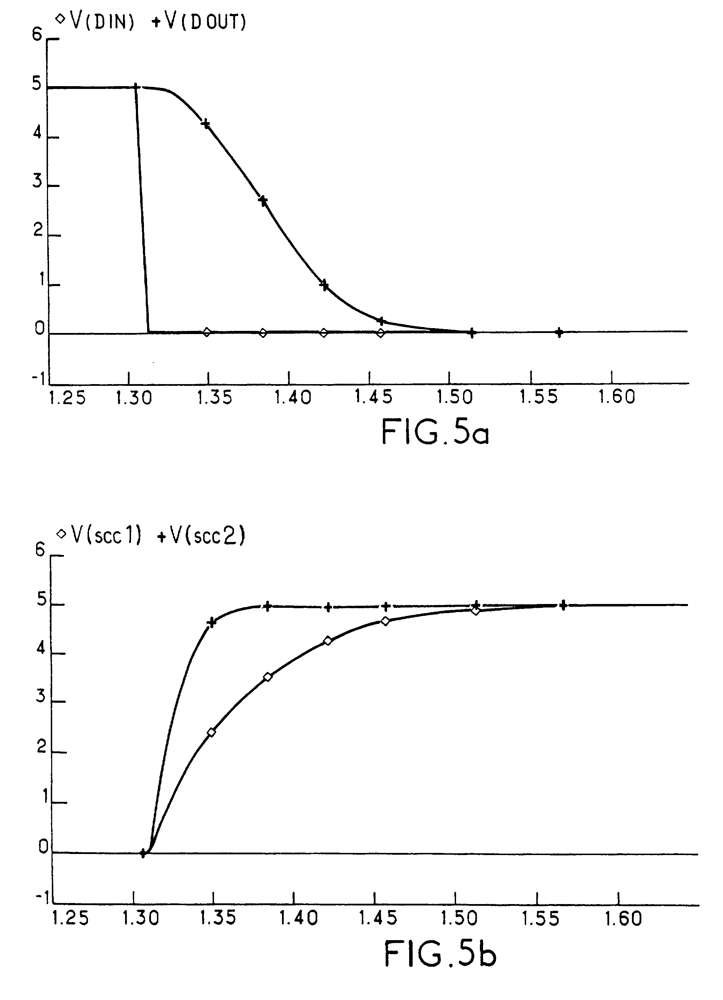

De la même manière, en figures 5a et 5b, on a représenté les mêmes signaux que dans les figures 4a et 4b respectivement, dans le cas d'une commutation d'un signal logique d'origine du niveau logique haut Vcc = 5 volts au niveau logique bas, tension de référence ou masse.

La figure 5a montre l'évolution de la tension de sortie DOUT, laquelle, par rapport à la tension d'entrée DIN, présente un retard semblable n'excédant pas 20 ns par rapport au cas de commutation symétrique représenté en figure 4a. On peut en particulier, par retournement de la figure 5a sur la figure 4a, constater que l'allure des temps de montée, respectivement de descente, est sensiblement la même avec une évolution de pente symétrique.

La figure 5b représente l'évolution du premier signal de commande de commutation $scc_1$ et du deuxième signal de commande de commutation $scc_2$. Le retard du temps de montée du premier signal de commande de commutation $scc_1$ par rapport au deuxième signal de commande de commutation $scc_2$ est à nouveau de l'ordre de 3 ns.

La superposition par retournement des figures 4a et 5a montre que les impédances statiques et dynamiques des éléments de commutation $B_1$ et $B_2$ selon la figure 1 ou la figure 2 sont ainsi adaptées à la même valeur sensiblement.

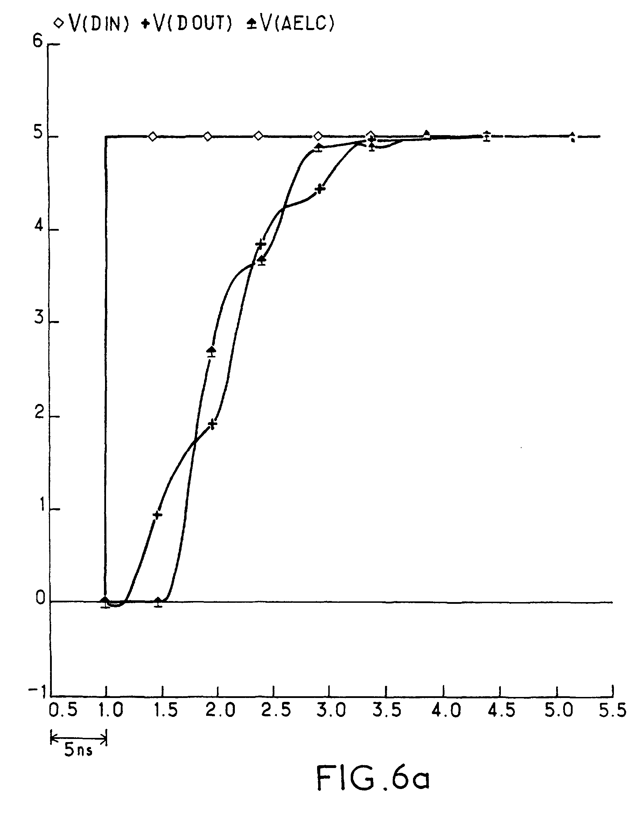

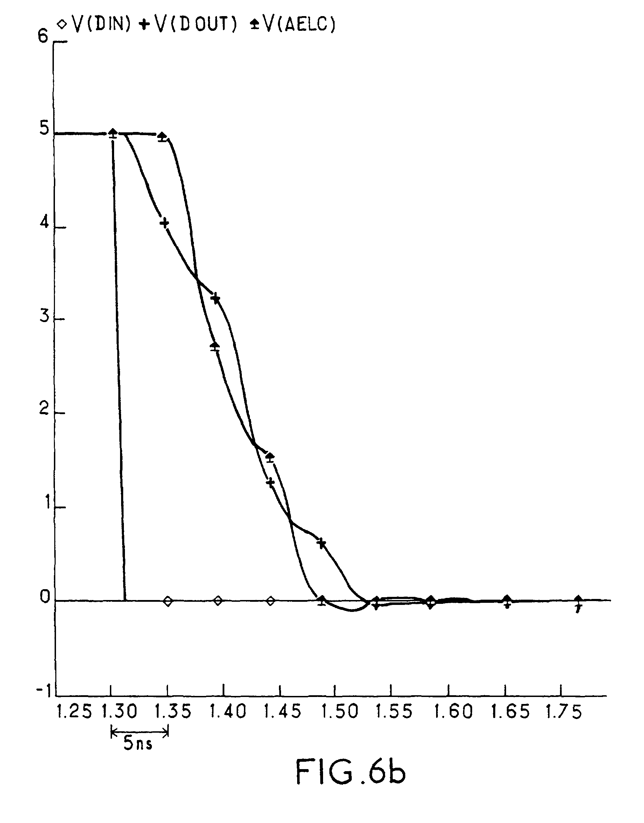

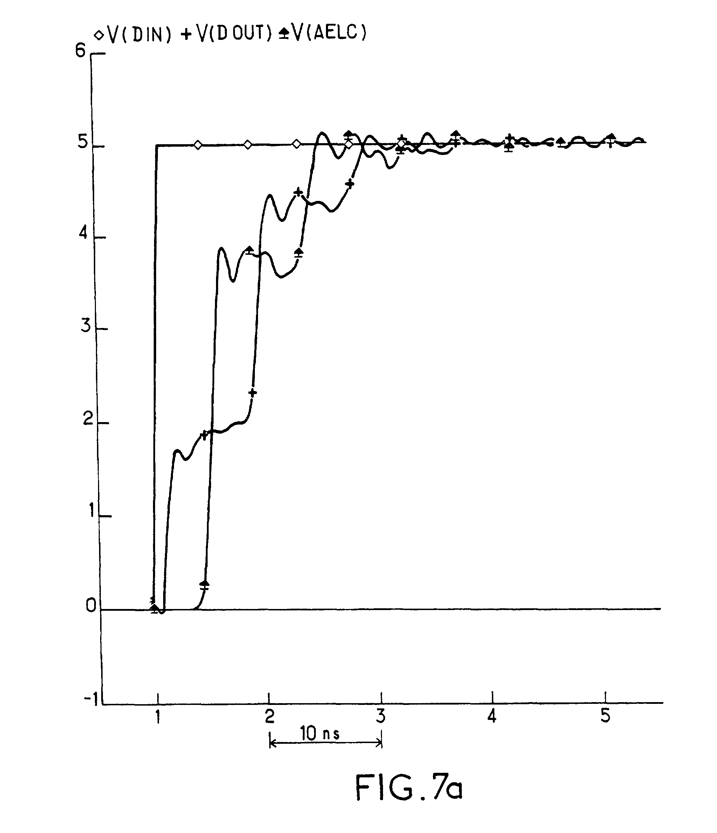

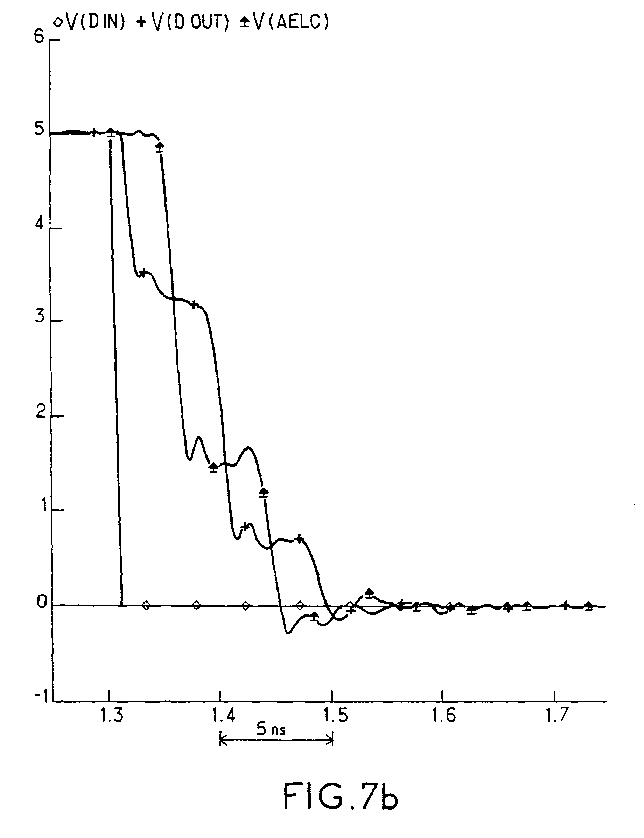

D'autres essais ont été effectués, ces essais étant traduits sous forme d'essais comparatifs grâce aux figures 6a, 6b et 7a, 7b ci-après.

Sur les figures 6a, 6b, on a représenté, d'une part, l'évolution d'une transition niveau logique bas/ niveau logique haut du signal logique d'entrée DIN, du signal logique adapté au signal de sortie DOUT et enfin, d'un signal correspondant à ce signal de sortie transmis à l'extrémité d'une ligne de transmission chargée de quelques centimètres de longueur, cette ligne de transmission présentant une impédance caractéristique de 50 Ω.

On peut, d'une première part, constater sur la figure 6a, que la tension représentative du signal logique adapté, ou signal de sortie DOUT, est modifiée par rapport au signal de sortie correspondant représenté en figure 4a lorsque le dispositif adaptateur symétrique de commutation d'un signal logique, objet de la présente invention, fonctionne à vide, c'est-à-dire en l'absence de toute liaison à une ligne de transmission. On constate en particulier sur la figure 6a que la transition du niveau logique bas au niveau logique haut, c'est-à-dire la transition du signal logique adapté constituant le signal de sortie, présente des perturbations de temps de montée légères. Ces perturbations sont en effet légères, car la transition reste monotone croissante du niveau logique bas au niveau logique haut, en l'absence de tout rebondissement de tension à dérivée négative. Il en est de même pour ce qui concerne le signal transmis à l'extrémité de la ligne chargée, ce signal représentant sensiblement une transition monotone croissante du niveau logique bas au niveau logique haut.

Sur la figure 6b, on a représenté, au contraire, le cas d'une transition niveau logique haut/ niveau logique bas dans les mêmes conditions expérimentales que dans le cas de la figure 6a, c'est-à-dire pour un dispositif adaptateur symétrique de commutation d'un signal logique relié à une ligne de transmission chargée. On constate de la même façon que, dans ce cas-là, les transitions représentatives du signal de sortie DOUT et du signal obtenu en extrémité de ligne chargée, c'est-à-dire au niveau de la charge, constituent une transition monotone décroissante en la quasi-absence de rebondissements de tension.

Les figures 7a et 7b représentent les chronogrammes des signaux obtenus pour une transition niveau logique bas/niveau logique haut, respectivement une transition niveau logique haut/ niveau logique bas, dans le cas où le signal logique d'origine est délivré à une même ligne de transmission que dans le cas des figures 6a et 6b en l'absence toutefois d'un dispositif adaptateur symétrique de commutation de signal logique, conforme à l'objet de la présente invention.

Tant dans le cas de la figure 7a que de celui de la figure 7b, on peut constater l'existence de nombreux rebondissements de tension qui se traduisent par une transition perturbée dans laquelle la transition n'est monotone, ni en montée ni en descente.

On a ainsi décrit un dispositif adaptateur symétrique de commutation de signal logique permettant l'envoi de données numériques dans une ligne de transmission, ce dispositif permettant en particulier de lisser les paliers de réflexion, c'est-à-dire de supprimer tout rebondissement dans les transitions de commutation de niveau logique, ces transitions étant alors sensiblement monotones, soit croissantes, soit décroissantes.

Le dispositif, objet de la présente invention, permet ainsi d'atténuer au mieux le bruit conduit malgré les variations de tension en sortie entre le niveau logique haut et le niveau logique bas, et réciproquement.

En ce qui concerne le fonctionnement en sortie haute impédance, on indique que celui-ci est obtenu grâce aux transistors TP5, TP6, TN7 et TN8, lesquels permettent d'assurer la mise haute impédance de la sortie lorsque le signal de contrôle CTR est à la valeur zéro. On comprend que, dans un tel cas, les inverseurs 12 et 13 permettent alors le blocage des éléments de commutation $B_1$ et $B_2$. Dans le cas contraire, pour CTR au niveau logique haut, la borne de sortie délivre le signal logique adapté DOUT, lequel est retardé par rapport au signal d'entrée DIN dans les conditions décrites précédemment dans la description.

Le dispositif adaptateur symétrique de commutation d'un signal logique, objet de la présente invention, est particulièrement avantageux dans la mesure où il permet une intégration dans une matrice de type logique, alors qu'une évolution quasi-symétrique des paramètres électriques est ainsi obtenue. En outre, ce dispositif permet d'obtenir une absence de consommation statique et, dans le cas d'un fonctionnement dynamique, une mise en forme des transitions de commutation avec atténuation sensible des paliers de réflexion avec suppression des rebondissements de tension.

**Revendications**

1.   Dispositif adaptateur symétrique de commutation d'un signal logique, la commutation de ce signal logique intervenant entre un niveau logique haut et un niveau logique bas, ou réciproquement, ledit dispositif adaptateur délivrant un signal logique adapté en phase avec ledit signal logique, respectivement un signal sensiblement constant sur une borne de sortie à haute impédance, **caractérisé en ce que** ledit dispositif comporte au moins, connectés en cascade :

-   des moyens (1) de commande de transmission ou de non-transmission par ledit dispositif adaptateur, lesdits moyens de commande recevant sur une première borne d'entrée ledit signal logique et sur une deuxième borne d'entrée un signal logique de commande, et délivrant un premier et un deuxième signal de commande de commutation asymétrique, le premier signal de commande de commutation du niveau logique haut au niveau logique bas, ou réciproquement, présentant un temps de descente, respectivement de montée, supérieur à celui du deuxième signal de commande de commutation ;

- des moyens (2) de commutation de type bistable recevant lesdits premier et deuxième signaux de commande de commutation et délivrant sur une borne de sortie, constituant ladite borne de sortie dudit dispositif adaptateur symétrique,

• ledit signal logique adapté en phase avec ledit signal logique pour une première valeur logique dudit signal logique de commande, et, pour une valeur complémentée de cette première valeur logique dudit signal logique de commande,

• ledit signal sensiblement constant sur ladite borne de sortie à haute impédance.

2. Dispositif selon la revendication 1, **caractérisé en ce que** lesdits moyens (1) de commande comportent au moins :

- une porte logique NON-ET (10) recevant sur une première entrée logique ledit signal logique et sur une deuxième entrée un signal logique duplication dudit signal logique de commande, la borne de sortie de ladite porte logique NON-ET (10) délivrant un premier signal logique de commande de commutation intermédiaire,

- une porte logique NON-OU (11) et un premier inverseur (12), ledit premier inverseur (12) recevant ledit signal logique de commande et délivrant un signal logique de commande inversé, ladite porte logique NON-OU (11) recevant sur une première entrée logique ledit signal logique et sur une deuxième entrée logique ledit signal logique de commande inversé et délivrant un deuxième signal logique de commande de commutation intermédiaire ;

- un deuxième inverseur (13) recevant ledit signal logique de commande inversé et délivrant ledit signal logique duplication dudit signal logique de commande ;

- des moyens (14) de mise en forme asymétrique recevant lesdits premier et deuxième signaux logiques de commande de commutation intermédiaire et délivrant lesdits premier et deuxième signaux de commande de commutation.

3. Dispositif selon la revendication 2, **caractérisé en ce que** lesdits moyens (14) de mise en forme asymétrique comprennent :

- un premier circuit à résistance capacité d'une première constante de temps recevant ledit premier signal logique de commande de commutation intermédiaire et délivrant ledit premier signal de commande de commutation ;

- un deuxième circuit à résistance capacité d'une deuxième constante de temps, supérieure à la première constante de temps, recevant ledit deuxième signal logique de commande de commutation intermédiaire et délivrant ledit deuxième signal de commande de commutation.

4. Dispositif selon l'une des revendications 1 à 3, **caractérisé en ce que** celui-ci étant réalisé en technologie CMOS, lesdits moyens (2) de commutation de type bistable comportent au moins :

- un transistor MOS de type P dont l'électrode de drain est connectée à la tension d'alimentation positive, correspondant audit niveau logique haut, et dont l'électrode de source est connectée à ladite borne de sortie dudit dispositif adaptateur, l'électrode de grille dudit transistor MOS de type P recevant ledit premier signal de commande de commutation ;

- un transistor MOS de type N dont l'électrode de source est connectée à ladite borne de sortie dudit dispositif adaptateur et dont l'électrode de drain est connectée à la tension de référence, tension de masse, correspondant audit niveau logique bas, par l'intermédiaire d'un circuit d'adaptation d'impédance statique audit transistor MOS de type P, l'électrode de grille dudit transistor MOS de type N recevant ledit deuxième signal de commande de commutation.

5. Dispositif selon la revendication 4, **caractérisé en ce que** ledit circuit d'adaptation d'impédance statique audit transistor MOS de type P comprend un premier et un deuxième transistor MOS de type N, connectés en série avec ledit transistor MOS de type N, et un troisième transistor MOS de type N connecté en parallèle sur la branche formée par le transistor MOS de type N, le premier et le deuxième transistor MOS de type N connectés en série, les électrodes de grille du premier, du deuxième et du troisième transistor MOS de type N recevant ledit deuxième signal de commande de commutation.

**Patentansprüche**

1. Symmetrische Anpassvorrichtung zum Umschalten eines logischen Signals, wobei die Umschaltung dieses logischen Signals zwischen einem oberen und einem unteren logischen Niveau oder reziprok eintritt, wobei die Anpassvorrichtung ein logisches Signal abgibt, das mit dem logischen Signal in Phase angepasst ist, jeweils ein im wesentlichen konstantes Signal an einer Ausgangsklemme mit hoher Impedanz, **dadurch gekennzeichnet, dass** die Vorrichtung mindestens in Kaskade geschaltet Folgendes umfasst:

- Mittel (1) zum Steuern des Übertragens oder Nichtübertragens durch die Anpassvorrichtung der Steuermittel, die an einer ersten Eingangsklemme das logische Signal und an einer zweiten Eingangsklemme ein logisches Steuersignal empfangen und ein erstes und ein zweites asymmetrisches Umschaltsteuersignal abgeben, das erste Umschaltsteuersignal des logischen oberen Niveaus auf das logische untere Niveau oder reziprok, das eine Abstiegs- und eine Anstiegszeit aufweist, die größer ist als die des zweiten Umschaltsteuersignals;

- Mittel (2) zum Umschalten des bistabilen Typs, die das erste und das zweite Umschaltsteuersignal empfangen und an einer Ausgangsklemme, die die Ausgangsklemme der symmetrischen Anpassvorrichtung bildet,

- das logische Signal abgeben, das in Phase mit dem logischen Signal für einen ersten logischen Wert des logischen Steuersignals und für einen ergänzenden Wert zu diesem ersten logischen Wert des logischen Steuersignals angepasst ist,

- das im Wesentlichen konstante Signal an der Ausgangsklemme mit hoher Impedanz abgeben.

2. Vorrichtung nach Anspruch 1, **dadurch gekennzeichnet, dass** die Steuermittel (1) mindestens Folgendes umfassen:

- eine logische NICHT-UND-Schaltung (10), die an einem ersten logischen Eingang das logische Signal und an einem zweiten Eingang ein logisches Verdopplungssignal des logischen Steuersignals empfängt, wobei die Ausgangsklemme der logischen NICHT-UND-Schaltung (10) ein erstes logisches Zwischenumschaltsteuersignal abgibt,

- eine logische NICHT-ODER-Schaltung (11) und einen ersten Umkehrer (12), wobei der erste Umkehrer (12) das logische Steuersignal empfängt und ein logisches umgekehrtes Steuersignal abgibt, wobei die logische NICHT-ODER-Schaltung (11) auf einem ersten logischen Eingang das logische Signal empfängt und an einem zweiten logischen Eingang das umgekehrte logische Steuersignal und ein zweites logisches Zwischenumschaltsteuersignal abgibt;

- einen zweiten Umkehrer (13), der das umgekehrte logische Steuersignal empfängt und das logische Verdopplungssignal des logischen Steuersignals abgibt;

- Mittel (14) zum asymmetrischen Formen, die das erste und das zweite logische Zwischenumschaltsteuersignal empfangen und das erste und das zweite Umschaltsteuersignal abgeben.

3. Vorrichtung nach Anspruch 2, **dadurch gekennzeichnet, dass** die Mittel (14) zum asymmetrischen Formen Folgendes umfassen:

- eine erste Schaltung mit RC-Kopplung einer ersten Zeitkonstante, die das erste logische Zwischenumschaltsteuersignal empfängt und das erste Umschaltsteuersignal abgibt;

- eine zweite Schaltung mit RC-Kopplung einer zweiten Zeitkonstante, die größer ist als die erste Zeitkonstante, die das zweite logische Zwischenumschaltsteuersignal empfängt und das zweite Umschaltsteuersignal abgibt.

4. Vorrichtung nach einem der Ansprüche 1 bis 3, **dadurch gekennzeichnet, dass** diese in CMOS-Technologie hergestellt ist, wobei die Umschaltmittel (2) des bistabilen Typs mindestens Folgendes umfassen:

- einen MOS-Transistor des Typs P, dessen Drainelektrode an die positive Versorgungsspannung angeschlossen ist, die dem oberen logischen Niveau entspricht, und dessen Source-Elektrode an die Ausgangsklemme der Anpassvorrichtung angeschlossen ist, wobei die Steuerelektrode des MOS-Transistors des Typs P das erste Umschaltsteuersignal empfängt;

- einen MOS-Transistor des Typs N, dessen Source-Elektrode an die Ausgangsquelle der Anpassvorrichtung angeschlossen ist, und dessen Drainelektrode an die Referenzspannung, Massespannung, die dem unteren logischem Niveau entspricht, über eine Schaltung zum Anpassen der statischen Impedanz an den MOS-Transistors des Typs P angeschlossen ist, wobei die Steuerelektrode des MOS-Transistors des Typs N das zweite Umschaltsteuersignal empfängt.

5. Vorrichtung nach Anspruch 4, **dadurch gekennzeichnet, dass** die Schaltung zum Anpassen der statischen Impedanz an den MOS-Transistor des Typs P einen ersten und einen zweiten MOS-Transistor des Typs N umfasst, die in Serie mit dem MOS-Transistor des Typs N geschaltet sind, und einen dritten MOS-Transistor des Typs N, der parallel an den Zweig gebildet vom MOS-Transistor des Typs N, dem ersten und dem zweiten MOS-Transistor des Typs N, die in Serie geschaltet sind, angeschlossen ist, wobei die Steuerelektroden des ersten, des zweiten und des dritten MOS-Transistors des Typs N das zweite Umschaltsteuersignal empfangen.

## Claims

1. A symmetric adapter unit for switching a logic signal, the switching of this logic signal occurring between a high logic level and a low logic level, or vice versa, said adapter unit delivering a logic signal adapted in phase with said logic signal, and a substantially constant signal respectively to a high impedance output terminal, **characterised in that** said adapter unit comprises at least, connected in cascade:

   - means (1) of control of transmission or non-transmission by said adapter unit, said means of control receiving at a first input terminal said logic signal and at a second input terminal a control logic signal, and delivering a first and a second asymmetric switching control signal, said first switching control signal from the high logic level to the low logic level, or vice versa, presenting a fall time, and a rise time respectively, greater than that of said second switching control signal;
   - switching means (2) of bistable type receiving said first and second switching control signals and delivering to an output terminal, constituting an output terminal of said symmetric adapter unit,

   • said logic signal adapted in phase with the said logic signal for a first logic value of said control logic signal, and, for a complemented value of this first logic value of the said control logic signal,
   • said substantially constant signal to said high impedance output terminal.

2. An adapter unit according to claim 1, **characterised in that** said means (1) of control comprise at least:

   - a NAND logic gate (10) receiving at a first logic input said logic signal and at a second input a logic signal duplicating said control logic signal, the output terminal of said NAND logic gate (10) delivering a first intermediate switching control logic signal,
   - a NOR logic gate (11) and a first inverter (12), said first inverter (12) receiving said control logic signal and delivering an inverted control logic signal, said NOR logic gate (10) receiving at a first logic input said logic signal and at a second logic input said inverted control logic signal and delivering a second intermediate switching control logic signal;
   - a second inverter (13) receiving said inverted logic control signal and delivering said logic signal duplicating said control logic signal;
   - means (14) of asymmetric formatting receiving said first and second intermediate switching control logic signals and delivering said first and second switching control signals.

3. An adapter unit according to claim 2, **characterised in that** said means (14) of asymmetric formatting include:

   - a first resistor capacitor circuit with a first time constant receiving said first intermediate switching control logic signal and delivering said first switching control signal;
   - a second resistor capacitor circuit with a second time constant, greater than said first time constant, receiving said second intermediate switching control logic signal and delivering said second switching control signal.

4. An adapter unit according to claims 1, 2 or 3, **characterised in that** said adapter unit being implemented in CMOS technology, said switching means (2) of bistable type comprise at least:

   - a p-type MOS transistor the drain electrode of which is connected to a positive supply voltage, corresponding to said high logic level, and the source electrode of which is connected to said output terminal of said adapter unit, the gate of the said p-type MOS transistor receiving said first switching control signal;
   - an n-type MOS transistor the source electrode of which is connected to said output terminal of said adapter unit and the drain electrode of which is connected to a reference voltage, ground voltage, corresponding to said low logic level, via a circuit of static impedance matching said p-type MOS transistor, the gate of said n-type MOS transistor receiving said second switching control signal.

5. An adapter unit according to claim 4, **characterised in that** said circuit of static impedance matching said p-type MOS transistor includes a first and a second n-type MOS transistor, connected in series with said n-type MOS transistor, and a third n-type MOS transistor connected in parallel on the limb formed by the n-type MOS transistor, the first and second n-type MOS transistors connected in series, the gates of the first, of the second and of the third n-type MOS transistors receiving said second switching control signal.

FIG.1

FIG.2

EP 0 899 921 B1

FIG.3a

FIG.3b

◇V(DIN) + V(D OUT)

FIG.4a

◇V(scc1) + V(scc2)

FIG.4b

FIG.5a

FIG.5b

◇V(DIN) +V(DOUT) ±V(AELC)

FIG.6a

◇V(DIN) +V(DOUT) ▲V(AELC)

FIG.6b

◇V(DIN) + V(D OUT) ♠V(AELC)

FIG.7a

FIG.7b